# EUROPEAN PATENT SPECIFICATION

(11) **EP 3 241 639 B1**
(45) Date of publication and mention of the grant of the patent: **29.04.2020**
(21) Application number: 16460026.4
(22) Date of filing: 02.05.2016
(51) Int. Cl.: B23D 77/14, B23D 77/02, B23B 29/03, B23P 6/00, B23B 41/12, B23B 49/00, B23Q 9/00

(54) **A DEVICE FOR RENOVATION OF CAR GEARBOX BEARING SEAT**
VORRICHTUNG ZUR RENOVIERUNG DES LAGERSITZES VON AUTOSCHALTGETRIEBEN
DISPOSITIF DE RÉNOVATION DE SIÈGE DE PALIER DE VITESSES DE VÉHICULE

(43) Date of publication of application: 08.11.2017
(73) Proprietor: ASGB Automatic Service, 38-400 Krosno (PL)
(72) Inventor: Brzezowski, Grzegorz, 38-400 Krosno (PL)
(74) Representative: Warzybok, Tadeusz

(56) References cited:
- EP-A1- 0 171 830
- EP-A2- 1 721 692
- GB-A- 1 280 035
- US-A- 2 945 403
- US-A- 5 580 195
- US-A1- 2009 038 134

## Description

The subject of the invention is a device for renovation of bearing seats in car gearboxes, either automatic or manual, to be used especially in cars of "Audi" type, whereas the device can find also its application in renovation of bearing seats in gearboxes of various types including 0AW-Multitronik, 0B5-DSG S-tronic 7, 8HP, and 0C8.

Description of invention contained in Polish patent application P.387634 discloses a head for rod milling comprising a cylindrical body, a tool band clip with conical clutch connected with said body, and cutting tools. The body, on one of its sides, has a seat with slots for cylindrical joint with dogs of the tool chuck, and on the other side, a seat for a screw fixing the tool chuck. On opposite sides of and parallel to axis of the body, there are symmetrically distributed sockets for fixing cutting tools, and moreover, on the outer cylindrical surface, on two opposite side thereof, there are recesses in the walls provided with threaded holes for clamping screws oriented perpendicularly to said walls.

From patent description of invention No. US 7052217 B2 a multiple cutting edge rotary tool having a radial individual adjustment of each cutting edge or having a central adjustment for all cutting edges together is known. The tool has a body with holders attached to it via U-shaped apertures designed as parallel bending spring arrangement such that at least a portion of said each holder is elastically deflectable proximate the cutting tip. Further, the tool is equipped with adjusting device comprising a differential screw threadably engaged in a first tapered inner sleeve having a tapered outer contour, an outer sleeve having a tapered inner contour, and pressure pieces supported on the outer sleeve.

Patent description US5580195A discloses a cutter head with a front disc having non-detachable cutting plates with cooperates with a profiled guiding housing.

The pressure pieces can move radially holding said holders, the outer sleeve is axially movable in response to rotation of the differential screw, and the holders are radially movable by the pressure pieces in response to an axial adjustment movement of the outer sleeve.

Further, from a video published on YouTube website under https://www.youtube.com/watch?v=pVuZaj2ebxM, a device with the features of the preamble of claim 1 is known. The device is designed for repairing the left drive train of DSG-type seven-gear transmission to eliminate axial play of left front bearing, said device comprising a sleeve-shaped housing with two-step outer diameter the face of the wider front portion of which is provided with an annular outer offset with three semicircular lugs evenly distributed along circumference of the offset and provided with straight-through mounting holes. In the front portion of the housing, a cylindrical disc is installed with eight rectangular grooves distributed evenly along its circumference and eight cutting tools in the form of rectangular plates fixed in the grooves in such a way that faces of the cutting tools protrude outside the disc, and upper sides of the cutting tools protrude above outer surface of the disc. The inner end of the disc is joined axially with a cylindrical driving mandrel protruding outside the sleeve-shaped portion of the housing with smaller diameter, the face of which is equipped with a fixed annular element having a hole adapted to diameter of the cylindrical mandrel, on outer end of which fixed is a sleeve-shaped element with two-step outer diameter, outer face of wider portion of said element having a coaxial hole with smaller diameter to which the end of cylindrical mandrel of a separate device is attached to set the disc together with its eight cutting plates in simultaneous rotational and reciprocal motion. The annular outer offset of the housing of the device can be attached, with the use of three holes provided therein, to front face of the repaired gearbox by means of three bolts screwed into treaded holes provided in the gearbox from which the bearing with its shaft was earlier dismounted.

The objective of the present invention is to provide a simple and compact design of a device for renovation of bearing seat, both in car gearboxes, especially of "Audi" type, and in other mechanical devices, including development of design of the device not requiring specific qualifications of the personnel applying it and possibility to be used both in authorised car service stations and in conditions available in average car repair workshops. A further objective of the invention is to provide such device for renovation of car gearbox bearing seats which will be possible to use without removing the gearbox from car and thus shorten the time required to perform such renovation and reduce the renovation cost as much as possible.

These objectives are achieved through the device according to claim 1. The essential idea behind the device for renovation of car gearbox bearing seats, consists in that the front disc of the milling head of the device is equipped with three replaceable cutting plates, edges of which are symmetrically distributed along perimeter of their pitch circle with a first radius "R1", the cutter head having a three-step guiding mandrel attached to the front disc, whereby the three-step guiding mandrel on the side closer to the front disc is inserted in a sleeve on which a profiled housing is mounted, the profiled housing being provided with three through bores distributed symmetrically on a perimeter of their circle with a second radius "R2", and moreover, on the other end of the mandrel with smaller diameter a spacing piece is mounted, the spacing piece being supported on an annular face of the mandrel, wherein on a sleeve-shaped portion of the spacing piece there is a disc mounted with a roller bearing mounted in its ring-shaped seat, with which an inner projection of a disc-shaped support is in contact, said support being mounted also on the end of the guiding mandrel, with the position of said disc-shaped support on the mandrel being fixed by means of a Seeger ring.

Preferably the front disc of the cutter head has a form of a solid with a profile resembling an equilateral triangle with truncated vertices, to which the three replaceable cutting plates are detachably connected. Preferably the profiled housing also has a front disc with a profile similar to an equilateral triangle with truncated vertices and, below said vertices, is provided with the through bores, and moreover, on the axis of symmetry of the head, it is provided with a two-step through bore comprising a front bore with larger diameter in which the front disc of the cutter head is loosely inserted. It is also favourable when the spacing piece comprises an outer annular flange on its end resting on annular face of the mandrel.

The device for the renovation of car gearbox bearing seats according to the invention represents a simple, compact, and inexpensive design solution, easy to use, and moreover, it creates the possibility to increase its versatility by adopting arrangement of the centring-mounting bores in the front disc of the profiled housing to the layout of block of gearbox of any type installed either in a car or in any industrial machine or device. The use of a spacing piece supported on annular face of the cutter head's guiding mandrel in the device according to the invention allows the depth of the machined bearing seat to be limited in the course of rotational and longitudinal motion of the head. An additional good point of the device is the possibility to use any typical handheld power drill to drive the device's cutter head which facilitates significantly the use of the device, reduces the time necessary to renovate round bearing seats, and significantly reduces the renovation time, with the additional advantage consisting in easy replacement of spent cutting plates.

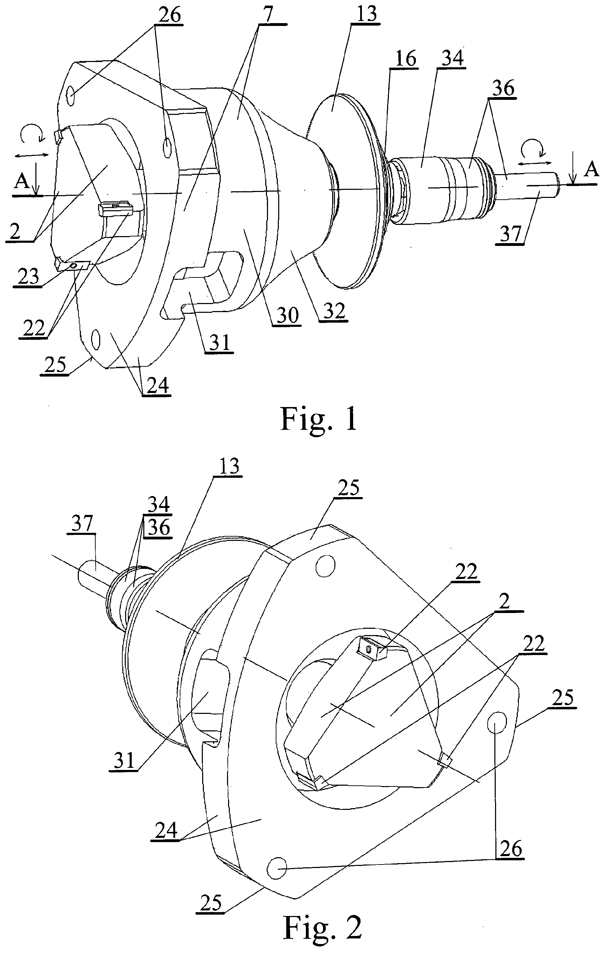

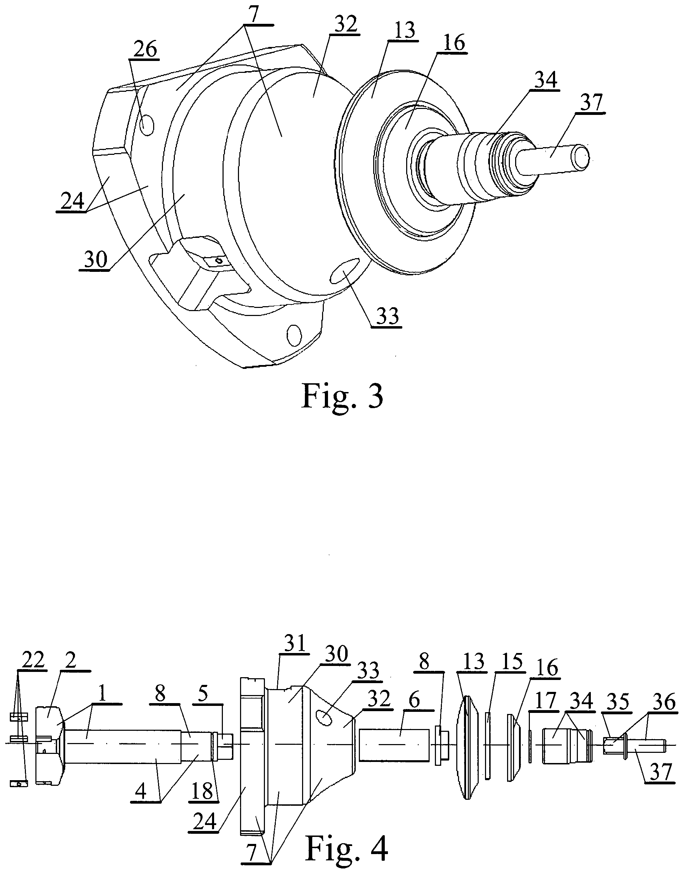

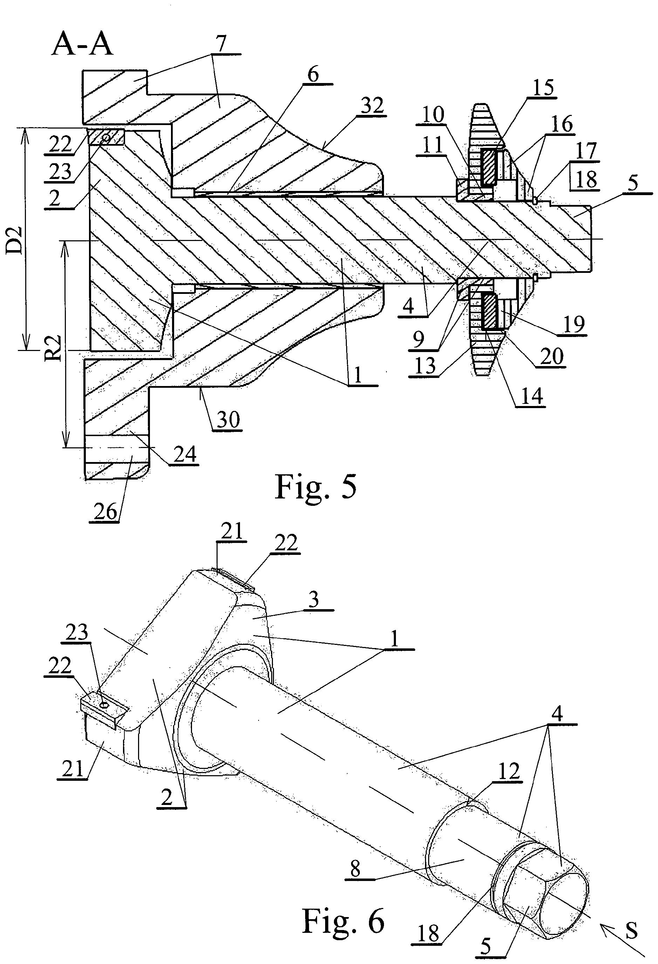

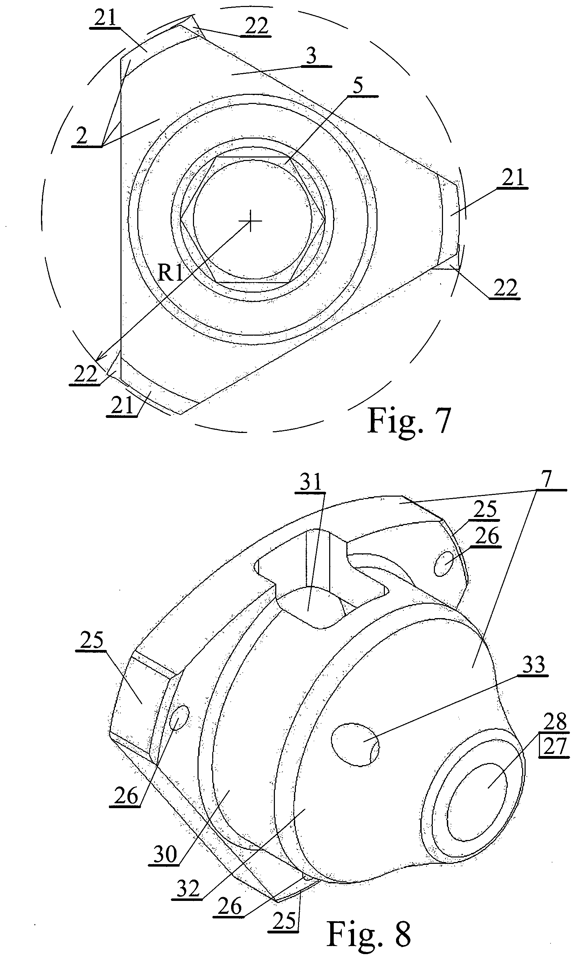

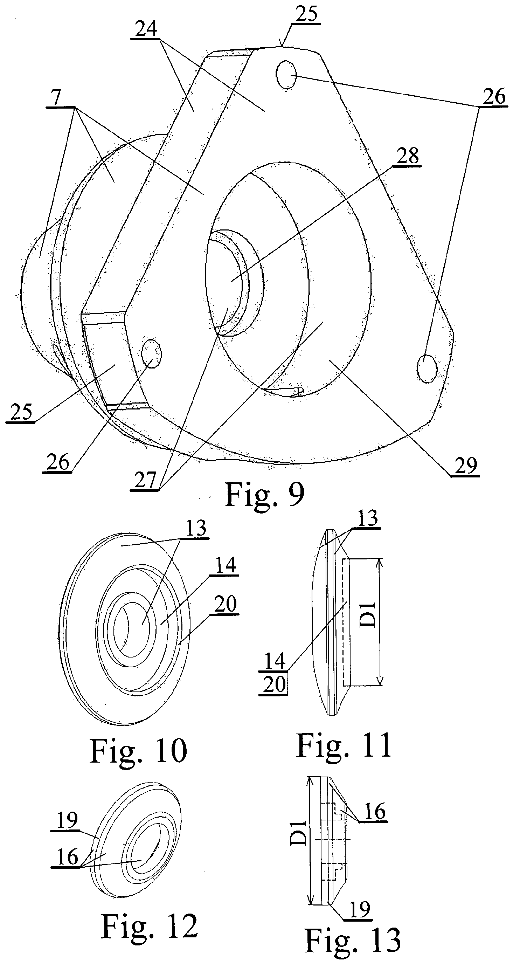

The subject of the invention is illustrated by means of its example embodiment shown in drawings, of which Fig. 1 presents the device for renovation of car gearbox bearing seat in cars of "Audi" type in an overall perspective view; Fig. 2 - the same device in a perspective view as seen from front and top; Fig. 3 - the same device in a perspective view as seen from back and a side; Fig. 4 - the same device in a exploded view of its component elements as seen from a side; Fig. 5 - the same device in axial cross-section along line A-A of Fig. 1; Fig. 6 - the cutter head of the device in a perspective view; Fig. 7 - the same cutter head as seen from behind in direction shown by arrow S; Fig. 8 - the profiled housing of the device in a perspective view as seen from behind and top; Fig. 9 - the same housing in a perspective view as seen from the front and top; Fig. 10 - the disc of the guiding mandrel of the device's cutter head in a perspective view as seen from behind, Fig. 11 - the same disc as seen from a side; Fig. 12 - the disc-shaped bearing support of the device in a perspective view as seen from behind; and Fig. 13 - the same disc-shaped bearing support as seen from a side.

The device for renovation of gearbox bearing seat in cars of "Audi" type has a cutter head 1, which comprises a front disc 2 and a concentrically oriented three-step guiding mandrel 4 protruding from inner surface 3 of said disc and with a portion having a profile of regular hexagon 5. One cylindrical end of said mandrel with larger diameter on the side proximate the disc is positioned loosely in sleeve 6, on which the profiled housing 7 of the head is planted, and on the other cylindrical end 8 of the guiding mandrel with smaller diameter, there is a spacing piece 9 planted which comprises a sleeve-shaped portion 10 and a ring-shaped flange 11 adjoining the annular face 12 of the guiding mandrel 4. On the sleeve-shaped portion 10 of the spacing piece there is a disc 13 planted with a roller bearing 15 planted in its rear annular seat 14, and on the end cylindrical portion 8 of the mandrel there is a disc-shaped support 16 planted, the position of said support being fixed by means of Seeger ring 17 inserted in annular groove 18 of guiding mandrel 4. Inner offset 19 of said disc-shaped support with diameter D1 is situated in prolonged portion 20 of seat 14 of disc 13 and adheres to the roller bearing.

The front disc 2 of the cutter head 1 has the form of a solid with profile similar to an equilateral triangle with truncated vertices 21, with three replaceable cutting plates 22, preferably of APKT type, attached to said vertices by means of screws 23, and with tips of said plates distributed symmetrically on perimeter of a circle with radius R1 and diameter D2 equalling the diameter of the renovated bearing seat by means of the reaming-milling method.

Further, the profiled housing 7 has a front face disc 24 also with profile similar to equilateral triangle with truncated vertices 25 with three through bores 26 provided below them. On its symmetry axis, the profiled housing is provided with a two-step through bore 27, comprising a bore 28 with smaller diameter in which sleeve 6 is planted, and a front bore 29 with larger diameter, in which the front disc 2 of the cutter head 1 is loosely inserted. The three through bores 26 of the housing's front disc 24 are distributed symmetrically on its surface, i.e. at a pitch of 120° along perimeter of a circle with radius R2, equalling the pitch circle at which threaded bores are distributed in the gearbox casing, with the renovated (reamed) bearing seat (not shown in the figures) located centrally between said bores. Moreover, the cylindrical portion 30 of the profiled housing 7 and partly the disc-shaped portion 24 are provided with an orifice 31 for removing chips. On its conical portion 32 the profiled housing 7 is provided with a hole 33 for periodical lubrication of guiding mandrel 4 of the cutter head 1. Moreover, on the end portion of the hexagonal profile 5 of the guiding mandrel 4 of the cutter head 1, there is a box wrench (spanner) 34 planted with axial holes having regular hexagonal profiles, and into said box wrench, hexagonal portion 35 of connection bit 36 is inserted with cylindrical portion 37 thereof being used for being mounted in the three-jaw chuck of a handheld power drill not shown in the figures, which sets the device according to the invention in rotational and reciprocal motion.

The principle of use of the device for renovation of car gearbox bearing seat, for instance in cars of "Audi" type according to the invention consists in that the device, aligned with the axis of the differential gear, is fixed to the casing of the car gearbox by means of three bolts inserted through bores 26 of the front disc 24 of the profiled housing 7, ensuring thus alignment (centring) of the device with respect to the axis of said gear. Next, after planting the box wrench 34 on hexagonal portion 5 of the guiding mandrel 4 of the cutter head 1 of the device, and inserting the connection bit 36 into said box wrench, the cylindrical portion 37 of the bit is clamped in the three-jaw chuck of a portable power drill. After activation of the drill, machining of the renovated bearing seat occurs up to the required depth depending on depth of the seat damage. Then, the drill chuck sets the cutter head 1 in rotational motion, and pressure applied against the machined bearing seat sets the head in feed motion along the seat axis and results in reaming the seat up to the required diameter. Machining of the bearing seat can be performed either on a gearbox removed from or mounted in a car.

## Claims

1. A device for renovation of car gearbox bearing seats, equipped with a profiled housing (7) and a cutter head (1), the cutter head comprising a front disc (2) and a mandrel (4), which is attached to, and protrudes from, the front disc (2), wherein the front disc (2) is equipped with cutting plates (22), the cutting tips of which are distributed symmetrically along a pitch circle with a first radius (R1), wherein a front face (24) of the profiled housing (7) has three through bores (26), the cutting head (1) being able to be reciprocated and driven in rotation by a hand-held power drill, **characterised in that** the front disc (2) of the cutter head (1) of the device is equipped with exactly three replaceable cutting plates (22), preferably multi-profiled ones, wherein the mandrel (4) is a three-step guiding mandrel (4), wherein the portion of the three-step guiding mandrel (4) proximate the front disc (2) is inserted in a sleeve (6), on which the profiled housing (7) is mounted, wherein the three through bores (26) are symmetrically distributed on a perimeter of a circle with a second radius (R2), wherein the end (8) of the mandrel remote from the front disc (1) has a section of reduced diameter on which is mounted a spacing piece (9) supported on an annular face (12) of said mandrel, wherein on a sleeve-shaped portion (10) of said spacing piece (9) a disc (13) is mounted, wherein a roller bearing (15) is mounted in an annular seat (14) of said disc (13), and wherein the roller bearing (15) is in contact with an inner projection (19) of a disc-shaped support (16), the disc-shaped support also being mounted on the end (8) of the guiding mandrel (4), the position of said disc-shaped support (16) being fixed on said guiding mandrel (4) by means of a Seeger ring (17).

2. The device according to claim 1 **characterised in that** the front face (2) of the cutter head (1) has the shape of a solid with profile similar to an equilateral triangle with truncated vertices (27), to which the three replaceable cutting plates (22) are detachably connected.

3. The device according to claim 1 or 2 **characterised in that** the profiled housing (7) has a front face disc (24) with a profile similar to an equilateral triangle with truncated vertices and below said vertices, the profiled housing (7) is provided with the through bores (26), wherein along its axis of symmetry, it is provided with a two-step through bore (27), including a front bore (28) with larger diameter in which the front disc (2) of the cutter head (1) is loosely inserted.

4. The device according to claim 1 **characterised in that** the spacing piece (9) comprises an outer annular flange (11) on its end supported on the annular face (12) of the mandrel (4).

## Patentansprüche

1. Vorrichtung zur Sanierung von PKW-Getriebelagerbuchsen, ausgestattet mit einem Profilgehäuse (7) und einem Messerkopf (1), wobei der Messerkopf eine vordere Scheibe (2) und einen Bolzen (4) hat, der an ihr befestigt ist und von der vorderen Scheibe (2) absteht, wobei die vordere Scheibe (2) mit Schneidplatten (22) ausgestattet ist, deren Schneidspitzen symmetrisch entlang eines Teilkreises mit einem ersten Radius (Rl) verteilt sind, wobei eine die Stirnseite (24) des Profilgehäuses (7) drei Durchgangsbohrungen (26) hat, wo der Schneidkopf (1) von einer handgeführten Bohrmaschine hin- und her bewegbar und drehend antreibbar ist, und **dadurch gekennzeichnet ist, dass** die vordere Scheibe 10. der Messerkopfs (1) der Vorrichtung mit genau drei austauschbaren Schneidplatten (22), vorzugsweise mehrprofilige Platten ausgestattet ist, wobei der Bolzen (4) ein dreistufiger Führungsbolzen (4) ist, wobei der Abschnitt des dreistufigen Führungsbolzens (4) 15 in der Nähe der vorderen Scheibe (2) ist eine Hülse (6) eingesetzt, auf der das profilierte Gehäuse (7) montiert wurde, wobei die drei Durchbohrungen (26) symmetrisch auf einem eines Kreisumfang mit einem zweiten Radius (R2) verteilt sind,wobei das Ende (8) des von der vorderen Scheibe (1) abgewandten Bolzens einen Abschnitt mit verringertem Durchmesser hat, auf dem ein 20 Distanzstück (9) montiert wurde, das an der Ringfläche (12) des Bolzens abgestützt ist, bei dem auf einem hülsenförmigen Abschnitt (10) des Distanzstücks (9) eine Scheibe (13) moniert ist, wobei ein Rollenlager (15) in einer Ringbuchse (14) der Scheibe (13) gelagert ist und wobei das Wälzlager (15) in Kontakt mit einem Innenvorsprung (19) eines scheibenförmigen Trägers (16) steht der scheibenförmige 25 Träger ist ebenfalls am Ende (8) des Führungsbolzens (4) angebracht, wobei die Position des scheibenförmigen Trägers (16) mittels eines Seeger-Rings (17) am Führungsbolzen (4) festgelegt ist.

2. Die Vorrichtung nach Forderung 1 **dadurch gekennzeichnet, dass** die Stirnfläche (2) des Messerkopfes (1) die Form eines Festkörpers mit Profil ähnlich 30. des gleichseitigen Dreiecks mit abgeschnittenen Eckpunkten (27) ist, mit denen die drei austauschbaren Schneidplatten (22) lösbar verbunden sind.

3. Die Vorrichtung nach Forderung 1 oder 2 **dadurch gekennzeichnet, dass** das Profilgehäuse (7) eine Stirnscheibe (24) mit einem Profil ähnlich einem gleichseitigen Dreieck mit abgeschnittenen Eckpunkten hat und unterhalb dieser Eckpunkte das profilierte Gehäuse (7) mit 35 den drei Durchbohrungen (26) ist, bei denen entlang seiner Symmetrieachse eine zweistufige Durchgangsbohrung (27) mit einer vorderen Bohrung (28) mit größerem Durchmessers vorhanden ist, in der die vordere Scheibe (2) des Messerkopfes (1) lose eingesetzt liegt.

4. Die Vorrichtung nach Forderung 1 **dadurch gekennzeichnet, dass** das Distanzstück (9) an seiner Außenseite einen Ringflansch (11) auf 40 dem Endträger auf der Ringfläche (12) des Bolzens (4) hat.

## Revendications

1. Dispositif de rénovation de sièges de paliers de boîtes de vitesses de voitures, équipé d'un boîtier profilé (7) et d'une tête de coupe (1), la tête de fraisage comprenant un disque avant (2) et un mandrin (4), qui est fixé au disque avant (2) et fait saillie par rapport à celui-ci (2), le disque avant (2) étant équipé de plaques de découpe (22), dont les pointes de coupe sont réparties symétriquement le long du cercle primitif ayant un premier rayon (R1), une face frontale (24) du boîtier profilé (7) présentant trois trous traversants (26), la tête de coupe (1) pouvant être actionnée en va-et-vient et entraînée en rotation par une perceuse électrique portative, **caractérisé en ce que** le disque avant (2) de la tête de coupe (1) de l'appareil est équipé d'exactement trois plaques de coupe (22) remplaçables, de préférence des plaques multiprofilées, dans lequel le mandrin (4) est un mandrin de guidage à trois étages (4), dans lequel la partie du mandrin de guidage à trois étages (4) proche du disque avant (2) est insérée dans un manchon (6), sur lequel est monté le boîtier profilé (7), dans lequel les trois trous traversants (26) sont répartis symétriquement sur un périmètre de cercle d'un second rayon (R2), dans lequel l'extrémité (8) du mandrin opposée au disque avant (1) présente une section de diamètre réduit sur laquelle est montée une pièce d'écartement (9) qui s'appuie sur une face annulaire (12) dudit mandrin, dans lequel un disque (13) est monté sur une partie en forme de manchon (10) de ladite pièce d'écartement (9), dans lequel un roulement à rouleaux (15) est monté dans un siège annulaire (14) dudit disque (13), et dans lequel le roulement à rouleaux (15) est en contact avec une saillie intérieure (19) d'un support en forme de disque, le support en forme de disque étant également monté sur l'extrémité (8) du mandrin de guidage (4), la position dudit support en forme de disque (16) étant fixée sur ledit mandrin de guidage (4) au moyen d'une bague Seeger (17).

2. Le dispositif selon la revendication de brevet 1 **caractérisé en ce que** la face avant (2) de la tête de coupe (1) a la forme d'un solide avec un profil similaire à un triangle équilatéral avec des sommets tronqués (27), auquel les trois plaques de coupe remplaçables (22) sont reliées de manière amovible.

3. Le dispositif selon la revendication de brevet 1 ou 2, **caractérisé en ce que** le boîtier profilé (7) présente un disque de face avant (24) avec un profil similaire à un triangle équilatéral à sommets tronqués, et en dessous desdits sommets, le boîtier profilé (7) est muni de trous traversants (26), dans lequel le long de son axe de symétrie, il est muni d'un trou traversant à deux étapes (27), comprenant un trou avant (28) de plus grand diamètre dans lequel le disque avant (2) de la tête de coupe (1) est inséré de manière lâche.

4. Le dispositif selon la revendication de brevet 1 **caractérisé en ce que** la pièce d'écartement (9) comprend une bride annulaire extérieure (11) à son extrémité supportée sur la face annulaire (12) du mandrin (4).
